# EUROPEAN PATENT APPLICATION

(11) **EP 4 825 467 A1**
(43) Date of publication of application: **21.10.2026**
(21) Application number: 26162952.1
(22) Date of filing: 06.03.2026
(51) Int. Cl.: B01D 46/12, B01D 46/58

(54) **FILTER STRUCTURE AND BATTERY PACK INCLUDING SAME**

(30) Priority: 16.04.2025 KR 20250049251
(71) Applicant: SAMSUNG SDI CO., LTD., Yongin-si, Gyeonggi-do 17084 (KR)
(72) Inventor: CHOI, Hanyoung, 17084 Yongin-si (KR)
(74) Representative: Marks & Clerk LLP

(57) **Abstract**

The present disclosure provides a filter structure, including a base frame having a hollow, and a filter part including a plurality of filters in the base frame to filter foreign matter in a gas, the plurality of filters having different angles with respect to a flow direction of the gas.

## Description

### BACKGROUND

### 1.Field

The present disclosure relates to a filter structure and a battery pack including the same.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

A secondary battery may be used alone, but a plurality of secondary batteries may also be electrically connected to each other and housed in a housing to be used as a battery pack. When a thermal runaway situation occurs in the battery pack, high-temperature gas is discharged from at least one battery cell (secondary battery), and the high-temperature gas may be discharged to the outside through a pack vent part provided in the battery pack. However, the high-temperature gas may include active material detached from an electrode or molten aluminum particles, such that a flare may be ejected to the pack vent part, causing a fire in the battery pack.

The above information disclosed in this Background section is for enhancement of understanding of the background of the present disclosure, and therefore, it may contain information that does not constitute related (or prior) art.

### SUMMARY

Embodiments include a filter structure, including a base frame having a hollow, and a filter part including a plurality of filters in the base frame to filter foreign matter in a gas, the plurality of filters having different angles with respect to a flow direction of the gas.

The base frame may include a center frame, a first guide frame, a second guide frame, a third guide frame, and a fourth guide frame at regular intervals along a circumference of the center frame, and a support frame extending from opposite ends of the center frame and respectively connected to opposite ends of the first guide frame to the fourth guide frame.

The filter part may include a first filter coupled to the first guide frame and the second guide frame, a second filter in a direction perpendicular to the first filter, the second filter being coupled to the second guide frame and the third guide frame, a third filter facing the first filter, the third filter being coupled to the third guide frame and the fourth guide frame, and a fourth filter facing the second filter, the fourth filter being coupled to the fourth guide frame and the first guide frame.

The filter part may further include a fifth filter coupled to the first guide frame and the center frame, a sixth filter coupled to the second guide frame and the center frame, a seventh filter coupled to the third guide frame and the center frame, and an eighth filter coupled to the fourth guide frame and the center frame.

The filter part may include a first filter coupled to the first guide frame and the center frame, a second filter coupled to the second guide frame and the center frame, a third filter coupled to the third guide frame and the center frame, and a fourth filter coupled to the fourth guide frame and the center frame.

The filter part may further include a fifth filter coupled to the first guide frame and the second guide frame, and a sixth filter facing the fifth filter, the sixth filter being coupled to the third guide frame and the fourth guide frame.

The filter part may include a first filter having an arc shape, the first filter being coupled to the first guide frame and the second guide frame, a second filter having an arc shape, the second filter being in a direction perpendicular to the first filter, the second filter being coupled to the second guide frame and the third guide frame, a third filter having an arc shape, the third filter facing the first filter, the third filter being coupled to the third guide frame and the fourth guide frame, and a fourth filter having an arc shape, the fourth filter facing the second filter, the fourth filter being coupled to the fourth guide frame and the first guide frame.

The filter part may further include a fifth filter coupled to the first guide frame and the center frame, a sixth filter coupled to the second guide frame and the center frame, a seventh filter coupled to the third guide frame and the center frame, and an eighth filter coupled to the fourth guide frame and the center frame.

The filter part may further include an auxiliary filter coupled to the support frame.

The base frame may further include a reinforcing frame connecting opposite ends of the first guide frame to the fourth guide frame.

The filter part may have a pore size of 40 mesh to 150 mesh.

Embodiments include a battery pack, including a battery module including a plurality of battery cells, each of the plurality of battery cells including a cell vent part, a housing accommodating the battery module, a pack vent part on one side of the housing, the pack vent part being configured to discharge a gas generated from the plurality of battery cells to an outside, and a filter structure between the battery module and the pack vent part in the housing, the filter structure being configured to filter foreign matter in the gas.

The housing may include a housing body accommodating the battery module through an open surface, the housing body including an end plate perpendicular to the open surface and to which the pack vent part is coupled, a partition part coupled to the housing body between the end plate and the battery module to create an inflow space into which the gas flows, the filter structure being in the inflow space, a housing cover coupled to the open surface of the housing body.

The battery pack may further include a guide plate on an upper portion of the battery module, the guide plate including a communication hole communicating with the cell vent part, the guide plate being configured to guide the gas discharged from the cell vent part to flow to the pack vent part.

The guide plate may include a through-hole communicating with the inflow space such that the gas introduced through the communication hole flows into the inflow space.

The partition part may further include a flange part protruding toward an end plate side, the filter structure being on the flange part.

The end plate may include an exhaust hole facing the filter structure, the gas that has passed through the filter structure being discharged through the exhaust hole, the pack vent part is coupled to the end plate to communicate with the exhaust hole.

The filter structure may include a base frame having a hollow, and a filter part including a plurality of filters in the base frame to filter foreign matter in a gas, the plurality of filters having different angles with respect to a flow direction of the gas.

The base frame may include a center frame, a first guide frame, a second guide frame, a third guide frame, and a fourth guide frame at regular intervals along a circumference of the center frame, and a support frame extending from opposite ends of the center frame and respectively connected to opposite ends of the first guide frame to the fourth guide frame.

The filter part may include a first filter coupled to the first guide frame and the second guide frame, a second filter disposed in a direction perpendicular to the first filter, the second filter being coupled to the second guide frame and the third guide frame, a third filter disposed to face the first filter, the third filter being coupled to the third guide frame and the fourth guide frame, and a fourth filter disposed to face the second filter, the fourth filter being coupled to the fourth guide frame and the first guide frame.

At least some of the above and other features of the invention are set out in the claims.

### BRIEF DESCRIPTION OF DRAWINGS

Features will become apparent to those of ordinary skill in the art by describing in detail example embodiments with reference to the attached drawings, in which:
FIG. 1 is a perspective view illustrating an example of a filter structure according to some embodiments of the present disclosure;
FIG. 2 is a perspective view illustrating an example of a base frame in a filter structure according to some embodiments of the present disclosure;
FIG. 3 is a cross-sectional view illustrating an example of a filter structure according to a first embodiment of the present disclosure;
FIG. 4 is a cross-sectional view illustrating an example of a filter structure according to a second embodiment of the present disclosure;
FIG. 5 is a cross-sectional view illustrating an example of a filter structure according to a third embodiment of the present disclosure;
FIG. 6 is a cross-sectional view illustrating an example of a filter structure according to a fourth embodiment of the present disclosure;
FIG. 7 is a cross-sectional view illustrating an example of a filter structure according to a fifth embodiment of the present disclosure;
FIG. 8 is a cross-sectional view illustrating an example of a filter structure according to a sixth embodiment of the present disclosure;
FIG. 9 is a perspective view illustrating an example of a battery pack according to some embodiments of the present disclosure;
FIG. 10 is an exploded perspective view illustrating an example of a battery pack according to some embodiments of the present disclosure;
FIG. 11 is an enlarged view illustrating region A of FIG. 9;
FIG. 12 is a cross-sectional view illustrating an example of the filter structure of the first embodiment in a battery pack according to some embodiments of the present disclosure;
FIG. 13 is a cross-sectional view illustrating an example of the filter structure of the second embodiment in a battery pack according to some embodiments of the present disclosure;
FIG. 14 is a cross-sectional view illustrating an example of the filter structure of the third embodiment in a battery pack according to some embodiments of the present disclosure;
FIG. 15 is a cross-sectional view illustrating an example of the filter structure of the fourth embodiment in a battery pack according to some embodiments of the present disclosure;
FIG. 16 is a cross-sectional view illustrating an example of the filter structure of the fifth embodiment in a battery pack according to some embodiments of the present disclosure; and
FIG. 17 is a cross-sectional view illustrating an example of the filter structure of the sixth embodiment in a battery pack according to some embodiments of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her disclosure in the best way.

The embodiments described in this specification and the configurations shown in the drawings are only some of the embodiments of the present disclosure and do not represent all of the technical scope, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of local Patent Law.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (or under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

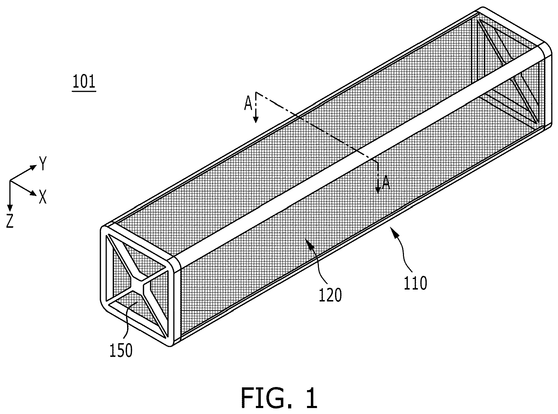

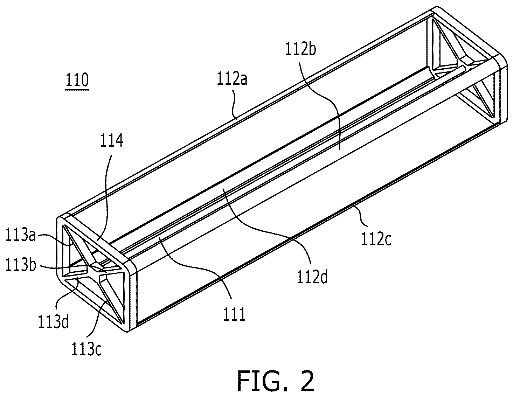

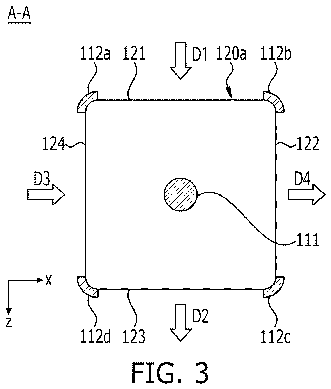

FIG. 1 is a perspective view illustrating an example of a filter structure according to some embodiments of the present disclosure, FIG. 2 is a perspective view illustrating an example of a base frame in a filter structure according to some embodiments of the present disclosure, and FIG. 3 is a cross-sectional view illustrating an example of a filter structure according to a first embodiment of the present disclosure.

Referring to FIG. 1 to FIG. 3, a filter structure 101 according to a first embodiment of the present disclosure may include a base frame 110 having a hollow, and a filter part 120a including a plurality of filters provided in the base frame 110 to filter foreign matter included in gas and to have different angles with respect to a flow direction of the gas.

The base frame 110 may be a configuration that supports the filter part 120a. In some embodiments, the base frame 110 may include a center frame 111, a first guide frame 112a, a second guide frame 112b, a third guide frame 112c, and a fourth guide frame 112d disposed at regular intervals along a circumference of the center frame 111, and a support frame extending from both ends (e.g., opposite ends) of the center frame 111 and respectively connected to both ends of the first guide frame 112a to the fourth guide frame 112d.

In some embodiments, the support frame may include a first support frame 113a connecting both ends of the center frame 111 and both ends of the first guide frame 112a, a second support frame 113b connecting both ends of the center frame 111 and both ends of the second guide frame 112b, a third support frame 113c connecting both ends of the center frame 111 and both ends of the third guide frame 112c, and a fourth support frame 113d connecting both ends of the center frame 111 and both ends of the fourth guide frame 112d. That is, first to fourth support frames 113a to 113d are provided at one end of the center frame 111, and first to fourth support frames 113a to 113d are provided at the other end of the center frame 111.

Also, a reinforcing frame 114 may be further included to reinforce the strength of the base frame 110. In some embodiments, the reinforcing frame 114 may connect both ends of each of the first guide frame 112a to the fourth guide frame 112d. That is, the reinforcing frame 114 may be configured to connect both ends of the first guide frame 112a, the second guide frame 112b, the third guide frame 112c, and the fourth guide frame 112d. That is, reinforcing frames 114 are provided at one end of each of the first to fourth guide frames 112a to 112d, and reinforcing frames 114 are provided at the other end of each of the first to fourth guide frames 112a to 112d.

The base frame 110 may be formed in a rectangular pillar shape by the first guide frame 112a to the fourth guide frame 112d and the reinforcing frame 114, and the center frame 111 may be disposed at the center of the first guide frame 112a to the fourth guide frame 112d through the first support frame 113a to the fourth support frame 113d. Of course, the shape of the base frame 110 may be formed in a polygonal pillar shape.

The filter part 120a may be in a form in which a plurality of filters are provided on the first guide frame 112a to the fourth guide frame 112d. Referring to FIG. 3, in some embodiments, the filter part 120a may include a first filter 121 coupled to the first guide frame 112a and the second guide frame 112b, a second filter 122 disposed in a direction perpendicular to the first filter 121 and coupled to the second guide frame 112b and the third guide frame 112c, a third filter 123 disposed to face the first filter 121 and coupled to the third guide frame 112c and the fourth guide frame 112d, and a fourth filter 124 disposed to face the second filter 122 and coupled to the fourth guide frame 112d and the first guide frame 112a.

The first filter 121 to the fourth filter 124 may each be formed in a rectangular plate shape. That is, the first guide frame 112a to the fourth guide frame 112d may correspond to edge regions in a rectangular pillar shape, and the first filter 121 to the fourth filter 124 may correspond to four surfaces in the rectangular pillar shape.

Referring to FIG. 3, in some embodiments, when gas flows in a D1 direction and is discharged in a D2 direction, the gas may pass through the first filter 121 and the third filter 123, whereby foreign matter included in the gas may be filtered.

When gas flows in the D1 direction and is discharged in a D4 direction, the gas may pass through the first filter 121 and the second filter 122, whereby foreign matter included in the gas may be filtered.

When gas flows in a D3 direction and is discharged in the D2 direction, the gas may pass through the fourth filter 124 and the third filter 123, whereby foreign matter included in the gas may be filtered.

When gas flows in the D3 direction and is discharged in the D4 direction, the gas may pass through the fourth filter 124 and the second filter 122, whereby foreign matter included in the gas may be filtered.

As such, even if the flow direction of the gas is constant or changes, the gas passes through a plurality of filters, so that foreign matter may be filtered more effectively.

The filter part 120a may further include an auxiliary filter 150 (see FIG. 1) coupled to the first support frame 113a to the fourth support frame 113d. That is, the auxiliary filter 150 may be disposed at both ends of the first guide frame 112a to the fourth guide frame 112d. In some embodiments, when gas flows in a Z-axis direction and then flows in a Z-axis or X-axis direction, the gas may pass through at least one of the first filter 121 to the fourth filter 124, whereby foreign matter may be filtered. Also, when gas flows in the Z-axis direction or the X-axis direction and then flows in a Y-axis direction, the gas may pass through at least one of the first filter 121 to the fourth filter 124 and the auxiliary filter 150, whereby foreign matter may be filtered. Therefore, the filter part 120a may be provided on all six surfaces of the base frame 110, which is in a rectangular pillar shape, to filter foreign matter included in the gas.

The filter part 120a may be formed of a metal filter mesh with a pore size of 40 mesh to 150 mesh. If the pore size of the filter part 120a is less than 40 mesh, the pore size becomes larger than the size of the foreign matter to be filtered, which may cause a problem in that the foreign matter cannot be effectively filtered. If the pore size of the filter part 120a exceeds 150 mesh, the pore size is very fine, which may cause a problem in that the filter part 120a is easily clogged.

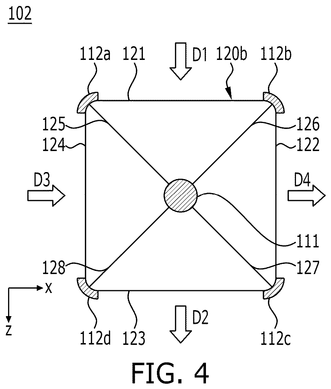

FIG. 4 is a cross-sectional view illustrating an example of a filter structure according to a second embodiment of the present disclosure.

Referring to FIG. 4, a filter structure 102 according to the second embodiment of the present disclosure may have a configuration in which a plurality of filters are further included, in the same configuration as the filter structure 101 according to the first embodiment.

In some embodiments, a filter part 120b may include a first filter 121 coupled to a first guide frame 112a and a second guide frame 112b, a second filter 122 disposed in a direction perpendicular to the first filter 121 and coupled to the second guide frame 112b and a third guide frame 112c, a third filter 123 disposed to face the first filter 121 and coupled to the third guide frame 112c and a fourth guide frame 112d, and a fourth filter 124 disposed to face the second filter 122 and coupled to the fourth guide frame 112d and the first guide frame 112a.

In addition, the filter part 120b may further include a fifth filter 125 coupled to the first guide frame 112a and a center frame 111 (e.g., running from end to end), a sixth filter 126 coupled to the second guide frame 112b and the center frame 111, a seventh filter 127 coupled to the third guide frame 112c and the center frame 111, and an eighth filter 128 coupled to the fourth guide frame 112d and the center frame 111.

The first filter 121 to the eighth filter 128 may each be formed in a rectangular plate shape. That is, the first guide frame 112a to the fourth guide frame 112d may correspond to edge regions in a rectangular pillar shape, and the first filter 121 to the fourth filter 124 may correspond to four surfaces in the rectangular pillar shape. In addition, the fifth filter 125 to the eighth filter 128 may be in a cross shape connecting the edge regions inside the rectangular pillar.

With this configuration, when gas flows in a D1 direction and is discharged in a D2 direction, the gas may pass through the first filter 121, the fifth filter 125, the eighth filter 128, and the third filter 123, whereby foreign matter included in the gas may be filtered. Alternatively, the gas may pass through the first filter 121, the sixth filter 126, the seventh filter 127, and the third filter 123, whereby foreign matter included in the gas may be filtered.

When gas flows in the D1 direction and is discharged in a D4 direction, the gas may pass through the first filter 121, the sixth filter 126, and the second filter 122, whereby foreign matter included in the gas may be filtered. For example, while filters 121 and 122 are perpendicular to the flow of gas (e.g., an approximately 90 degree angle), filter 126 is at a different angle with respect to the flow of gas (e.g., approximately a 45 degree angle). In another example, the gas may pass through the first filter 121, the fifth filter 125, the eighth filter 128, the seventh filter 127, and the second filter 122, whereby foreign matter included in the gas may be filtered.

When gas flows in a D3 direction and is discharged in the D2 direction, the gas may pass through the fourth filter 124, the eighth filter 128, and the third filter 123, whereby foreign matter included in the gas may be filtered. In another example, the gas may pass through the fourth filter 124, the fifth filter 125, the sixth filter 126, the seventh filter 127, and the third filter 123, whereby foreign matter included in the gas may be filtered.

When gas flows in the D3 direction and is discharged in the D4 direction, the gas may pass through the fourth filter 124, the fifth filter 125, the sixth filter 126, and the second filter 122, whereby foreign matter included in the gas may be filtered. In another example, the gas may pass through the fourth filter 124, the eighth filter 128, the seventh filter 127, and the second filter 122, whereby foreign matter included in the gas may be filtered.

As such, even if the flow direction of the gas is constant or changes, the gas passes through a plurality of filters, so that foreign matter may be filtered more effectively.

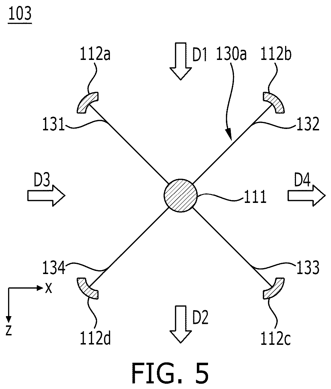

FIG. 5 is a cross-sectional view illustrating an example of a filter structure according to a third embodiment of the present disclosure.

Referring to FIG. 5, a filter structure 103 according to the third embodiment of the present disclosure may include a base frame 110 having a hollow, and a filter part 130a including a plurality of filters provided in the base frame 110. Here, the base frame 110 may have the same configuration as the base frame 110 described in the filter structure 101 according to the first embodiment.

In some embodiments, the filter part 130a may include a first filter 131 coupled to a first guide frame 112a and a center frame 111, a second filter 132 coupled to a second guide frame 112b and the center frame 111, a third filter 133 coupled to a third guide frame 112c and the center frame 111, and a fourth filter 134 coupled to a fourth guide frame 112d and the center frame 111. That is, the first filter 131 to the fourth filter 134 may be formed in a cross shape.

With this configuration, when gas flows in a D1 direction and is discharged in a D2 direction, the gas may pass through the first filter 131 and the fourth filter 134, whereby foreign matter included in the gas may be filtered. In another example, the gas may pass through the second filter 132 and the third filter 133, whereby foreign matter included in the gas may be filtered.

When gas flows in the D1 direction and is discharged in a D4 direction, the gas may pass through the second filter 132, whereby foreign matter included in the gas may be filtered. In another example, the gas may pass through the first filter 131, the fourth filter 134, and the third filter 133, whereby foreign matter included in the gas may be filtered.

When gas flows in a D3 direction and is discharged in the D2 direction, the gas may pass through the fourth filter 134, whereby foreign matter included in the gas may be filtered. In another example, the gas may pass through the first filter 131, the second filter 132, and the third filter 133, whereby foreign matter included in the gas may be filtered.

When gas flows in the D3 direction and is discharged in the D4 direction, the gas may pass through the first filter 131 and the second filter 132, whereby foreign matter included in the gas may be filtered. In another example, the gas may pass through the fourth filter 134 and the third filter 133, whereby foreign matter included in the gas may be filtered.

As such, even if the flow direction of the gas is constant or changes, the gas passes through a plurality of filters, so that foreign matter may be filtered more effectively.

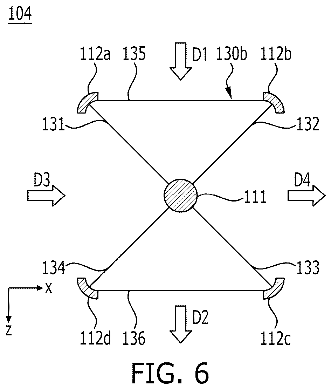

FIG. 6 is a cross-sectional view illustrating an example of a filter structure according to a fourth embodiment of the present disclosure.

Referring to FIG. 6, a filter structure 104 according to the fourth embodiment of the present disclosure may have a configuration in which a plurality of filters are further included, in the same configuration as the filter structure 103 according to the third embodiment.

In some embodiments, a filter part 130b may include a first filter 131 coupled to a first guide frame 112a and a center frame 111, a second filter 132 coupled to a second guide frame 112b and the center frame 111, a third filter 133 coupled to a third guide frame 112c and the center frame 111, and a fourth filter 134 coupled to a fourth guide frame 112d and the center frame 111. That is, the first filter 131 to the fourth filter 134 may be formed in a cross shape.

In addition, the filter part 130b may further include a fifth filter 135 coupled to the first guide frame 112a and the second guide frame 112b, and a sixth filter 136 disposed to face the fifth filter 135 and coupled to the third guide frame 112c and the fourth guide frame 112d. That is, the first filter 131 to the sixth filter 136 may be formed in an hourglass shape.

With this configuration, when gas flows in a D1 direction and is discharged in a D2 direction, the gas may pass through the fifth filter 135, the first filter 131, the fourth filter 134, and the sixth filter 136, whereby foreign matter included in the gas may be filtered. Alternatively, the gas may pass through the fifth filter 135, the second filter 132, the third filter 133, and the sixth filter 136, whereby foreign matter included in the gas may be filtered.

When gas flows in the D1 direction and is discharged in a D4 direction, the gas may pass through the fifth filter 135 and the second filter 132, whereby foreign matter included in the gas may be filtered. Alternatively, the gas may pass through the fifth filter 135, the first filter 131, the fourth filter 134, and the third filter 133, whereby foreign matter included in the gas may be filtered.

When gas flows in a D3 direction and is discharged in the D2 direction, the gas may pass through the fourth filter 134 and the sixth filter 136, whereby foreign matter included in the gas may be filtered. Alternatively, the gas may pass through the first filter 131, the second filter 132, the third filter 133, and the sixth filter 136, whereby foreign matter included in the gas may be filtered.

When gas flows in the D3 direction and is discharged in the D4 direction, the gas may pass through the first filter 131 and the second filter 132, whereby foreign matter included in the gas may be filtered. In another example, the gas may pass through the fourth filter 134 and the third filter 133, whereby foreign matter included in the gas may be filtered.

As such, even if the flow direction of the gas is constant or changes, the gas passes through a plurality of filters, so that foreign matter may be filtered more effectively.

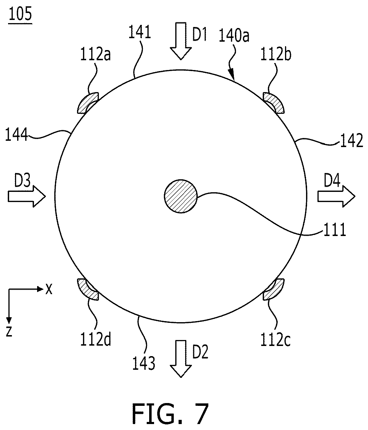

FIG. 7 is a cross-sectional view illustrating an example of a filter structure according to a fifth embodiment of the present disclosure.

Referring to FIG. 7, a filter structure 105 according to the fifth embodiment of the present disclosure may include a base frame 110 having a hollow, and a filter part 140a including a plurality of filters provided in the base frame 110. Here, the base frame 110 may have the same configuration as the base frame 110 described in the filter structure 101 according to the first embodiment.

In some embodiments, the filter part 140a may include a first filter 141 formed in an arc shape and coupled to a first guide frame 112a and a second guide frame 112b, a second filter 142 formed in an arc shape, disposed in a direction perpendicular to the first filter 141, and coupled to the second guide frame 112b and a third guide frame 112c, a third filter 143 formed in an arc shape, disposed to face the first filter 141, and coupled to the third guide frame 112c and a fourth guide frame 112d, and a fourth filter 144 formed in an arc shape, disposed to face the second filter 142, and coupled to the fourth guide frame 112d and the first guide frame 112a.

In some embodiments, the first filter 141 to the fourth filter 144 formed in an arc shape may be configured individually, and may be respectively coupled to the first guide frame 112a to the fourth guide frame 112d to be formed in a cylindrical shape as a whole. In another example, the first filter 141 to the fourth filter 144 may be integrally formed to be formed in a single cylindrical shape.

With this configuration, when gas flows in a D1 direction and is discharged in a D2 direction, the gas may pass through the first filter 141 and the third filter 143, whereby foreign matter included in the gas may be filtered.

When gas flows in the D1 direction and is discharged in a D4 direction, the gas may pass through the first filter 141 and the second filter 142, whereby foreign matter included in the gas may be filtered.

When gas flows in a D3 direction and is discharged in the D2 direction, the gas may pass through the fourth filter 144 and the third filter 143, whereby foreign matter included in the gas may be filtered.

When gas flows in the D3 direction and is discharged in the D4 direction, the gas may pass through the fourth filter 144 and the second filter 142, whereby foreign matter included in the gas may be filtered.

As such, even if the flow direction of the gas is constant or changes, the gas passes through a plurality of filters, so that foreign matter may be filtered more effectively.

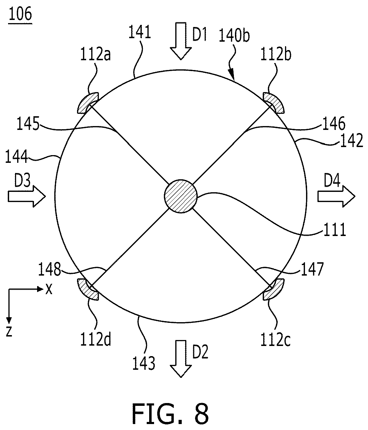

FIG. 8 is a cross-sectional view illustrating an example of a filter structure according to a sixth embodiment of the present disclosure.

Referring to FIG. 8, a filter structure 106 according to the sixth embodiment of the present disclosure may have a configuration in which a plurality of filters are further included, in the same configuration as the filter structure 105 according to the fifth embodiment.

In some embodiments, a filter part 140b may include a first filter 141 formed in an arc shape and coupled to a first guide frame 112a and a second guide frame 112b, a second filter 142 formed in an arc shape, disposed in a direction perpendicular to the first filter 141, and coupled to the second guide frame 112b and a third guide frame 112c, a third filter 143 formed in an arc shape, disposed to face the first filter 141, and coupled to the third guide frame 112c and a fourth guide frame 112d, and a fourth filter 144 formed in an arc shape, disposed to face the second filter 142, and coupled to the fourth guide frame 112d and the first guide frame 112a.

In addition, the filter part 140b may further include a fifth filter 145 coupled to the first guide frame 112a and a center frame 111, a sixth filter 146 coupled to the second guide frame 112b and the center frame 111, a seventh filter 147 coupled to the third guide frame 112c and the center frame 111, and an eighth filter 148 coupled to the fourth guide frame 112d and the center frame 111.

The fifth filter 145 to the eighth filter 148 may each be formed in a rectangular plate shape. That is, the first filter 141 to the fourth filter 144 may form a cylindrical shape, and the fifth filter 145 to the eighth filter 148 may be disposed in a cross shape inside the cylinder.

With this configuration, when gas flows in a D1 direction and is discharged in a D2 direction, the gas may pass through the first filter 141, the fifth filter 145, the eighth filter 148, and the third filter 143, whereby foreign matter included in the gas may be filtered. In another example, the gas may pass through the first filter 141, the sixth filter 146, the seventh filter 147, and the third filter 143, whereby foreign matter included in the gas may be filtered.

When gas flows in the D1 direction and is discharged in a D4 direction, the gas may pass through the first filter 141, the sixth filter 146, and the second filter 142, whereby foreign matter included in the gas may be filtered. In another example, the gas may pass through the first filter 141, the fifth filter 145, the eighth filter 148, the seventh filter 147, and the second filter 142, whereby foreign matter included in the gas may be filtered.

When gas flows in a D3 direction and is discharged in the D2 direction, the gas may pass through the fourth filter 144, the eighth filter 148, and the third filter 143, whereby foreign matter included in the gas may be filtered. In another example, the gas may pass through the fourth filter 144, the fifth filter 145, the sixth filter 146, the seventh filter 147, and the third filter 143, whereby foreign matter included in the gas may be filtered.

When gas flows in the D3 direction and is discharged in the D4 direction, the gas may pass through the fourth filter 144, the fifth filter 145, the sixth filter 146, and the second filter 142, whereby foreign matter included in the gas may be filtered. In another example, the gas may pass through the fourth filter 144, the eighth filter 148, the seventh filter 147, and the second filter 142, whereby foreign matter included in the gas may be filtered.

As such, even if the flow direction of the gas is constant or changes, the gas passes through a plurality of filters, so that foreign matter may be filtered more effectively.

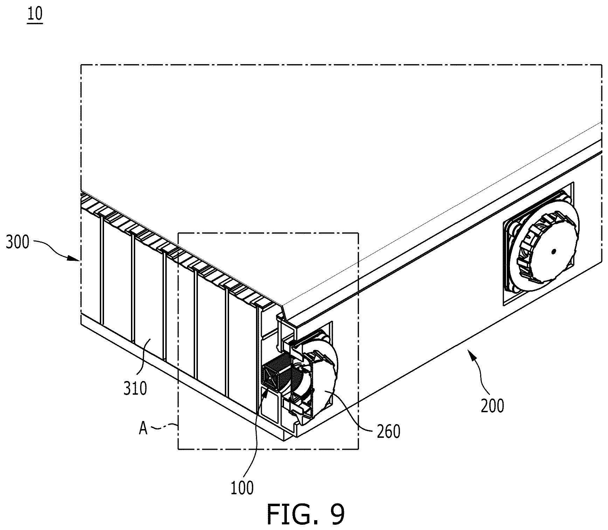

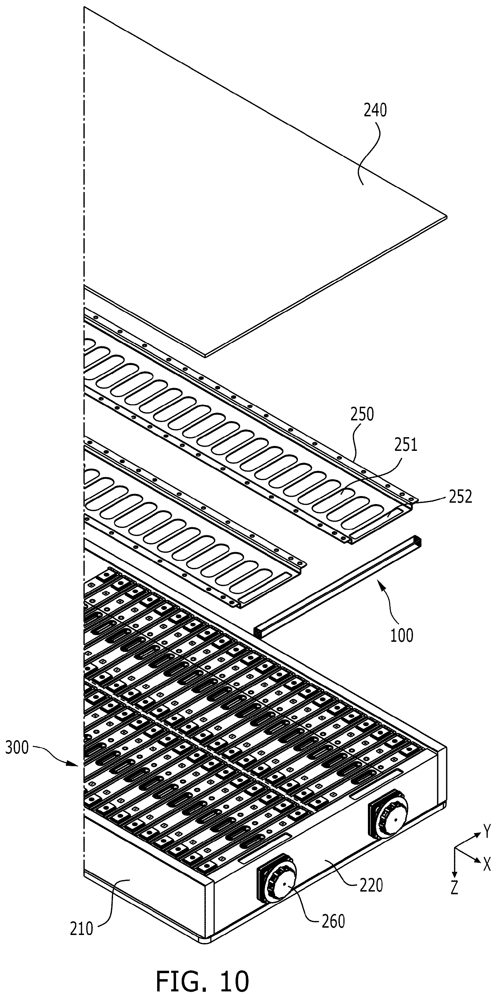

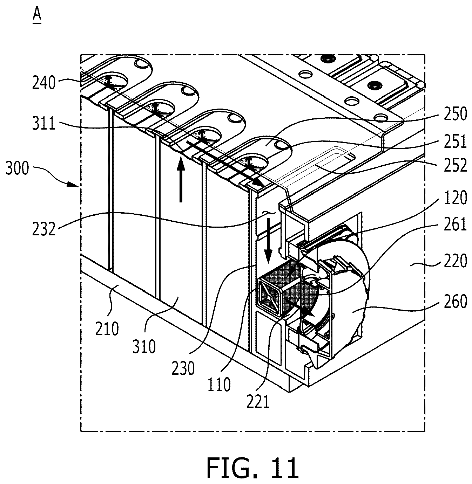

FIG. 9 is a perspective view illustrating an example of a battery pack according to some embodiments of the present disclosure, FIG. 10 is an exploded perspective view illustrating an example of a battery pack according to some embodiments of the present disclosure, and FIG. 11 is an enlarged view illustrating region A of FIG. 9.

Referring to FIG. 9 to FIG. 11, a battery pack 10 according to some embodiments of the present disclosure may include a battery module 300 including a plurality of battery cells 310 each provided with a cell vent part 311, a housing 200 in which the battery module 300 is accommodated, a pack vent part 260 provided on one side of the housing 200 and configured to discharge gas generated in the battery cells 310 to the outside, and a filter structure 100 disposed between the battery module 300 and the pack vent part 260 in the housing 200 and configured to filter foreign matter included in the gas.

In some embodiments, the battery module 300 may include a plurality of battery cells 310 arranged in a first direction (X). The plurality of battery cells 310 are electrically connected to adjacent battery cells through a busbar, and a protective circuit module may be connected to the busbar. The protective circuit module may be a battery management system (BMS). The battery module 300 may be provided as a pair and arranged side by side in a second direction (Y), which is a direction perpendicular to the first direction (X). That is, a pair of battery modules 300 may be arranged parallel to each other. Of course, although the battery module 300 is shown as being provided in a pair in the drawings, a single battery module 300 may be accommodated in the housing 200, or four or more battery modules 300 may be accommodated.

The battery cell 310 may include a battery case, and an electrode assembly and an electrolyte accommodated in the battery case. The electrode assembly and the electrolyte react electrochemically to generate energy. A cell vent part 311, which is a discharge passage for gas generated inside, may be provided on one surface of the battery cell 310. The cell vent part 311 may be a configuration that is destroyed by an increase in the internal pressure of the battery cell 310 when thermal runaway occurs inside the battery cell 310, and discharges the gas generated inside the battery cell 310 to the outside.

The plurality of battery cells 310 may be arranged in the first direction (X) such that the wide surfaces of the battery cells 310 face each other, and the arranged plurality of battery cells 310 may be accommodated in the housing 200. The cell vent part 311 of the battery cell 310 accommodated in the housing 200 may be disposed to be perpendicular to the first direction (X) and to face a third direction (Z), which is the direction in which the battery cell 310 is accommodated in the housing 200.

The battery case forms the overall appearance of the battery cell 310 and may be formed of a conductive metal such as aluminum, an aluminum alloy, or nickel-plated steel. The battery case may provide a space in which the electrode assembly is accommodated. The battery case may be a prismatic case. Of course, the battery cell 310 may be a battery cell of any shape such as cylindrical, pouch-type, etc.

The housing 200 may include a housing body 210 in which the battery module 300 is accommodated through an open surface (e.g., one surface) and which includes an end plate 220 disposed perpendicularly to the open surface and to which the pack vent part 260 is coupled, a partition part 230 coupled to the housing body 210 between the end plate 220 and the battery module 300 to form an inflow space 232 into which gas flows and in which the filter structure 100 is disposed, and a housing cover 240 coupled to the open one surface of the housing body 210.

The end plate 220 may be a configuration corresponding to one side surface in the first direction (X) of the housing body 210. The end plate 220 may include an exhaust hole 221 formed through to face the filter structure 100, and through which gas that has passed through the filter structure 100 is discharged. That is, the gas that has flowed into the inflow space 232 formed between the end plate 220 and the partition part 230 may be discharged to the outside through the exhaust hole 221.

The pack vent part 260 may be coupled to the end plate 220 to communicate with the exhaust hole 221. The pack vent part 260 may be coupled to an outer surface of the end plate 220 so as to be disposed outside the housing body 210. In some embodiments, the pack vent part 260 may be configured as a relief valve that opens when the pressure inside the housing 200 is greater than or equal to a certain level, and closes when the pressure is less than the certain level. The pack vent part 260 may further include a filter 261 that filters foreign matter from the gas discharged through the exhaust hole 221.

The partition part 230 may be a configuration coupled to the housing body 210 between the end plate 220 and the battery module 300 to form an inflow space 232 into which gas flows. The partition part 230 may be spaced apart from the end plate 220 in the first direction (X), protrude from the bottom surface of the housing body 210 in the third direction (Z), and extend in the second direction (Y). That is, the partition part 230 may be disposed parallel to the end plate 220.

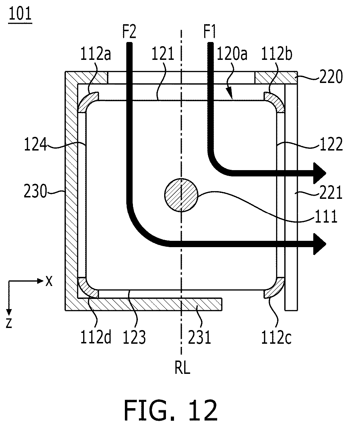

The partition part 230 may further include a flange part 231 (see FIG. 12) protruding toward the end plate 220 side and on which the filter structure 100 is disposed. The flange part 231 may be formed to protrude from the partition part 230 in the first direction (X) and may be formed such that the filter structure 100 is positioned facing the exhaust hole 221 formed in the end plate 220.

The battery pack 10 may further include a guide plate 250. The guide plate 250 may be disposed on an upper portion of the battery module 300, include a communication hole 251 that communicates with the cell vent part 311 provided in the battery cell 310, and guide the gas discharged from the cell vent part 311 to flow to the pack vent part 260.

The guide plate 250 may be formed with a length direction in the first direction (X) and a width direction in the second direction (Y). The guide plate 250 may be formed long along the first direction (X) in which the plurality of battery cells 310 are arranged in the battery module 300. In addition, the guide plate 250 may be formed with a plurality of communication holes 251 at positions corresponding to a plurality of cell vent parts 311 provided in each of the plurality of battery cells 310 along the first direction (X).

Both ends of the guide plate 250 in the second direction (Y), which is the width direction, may be bent and coupled to a housing cover 240. With this configuration, the guide plate 250 may form a flow path for gas to flow in the first direction (X) together with the housing cover 240. That is, when gas is discharged through the cell vent part 311 of the battery cell 310, the gas flows into a space between the guide plate 250 and the housing cover 240 through the communication hole 251 of the guide plate 250, and the introduced gas may flow in the first direction (X) along the flow path formed by the guide plate 250 and the housing cover 240.

The guide plate 250 may further include a through-hole 252 communicating with the inflow space 232 so that the gas introduced through the communication hole 251 flows into the inflow space 232 between the partition part 230 and the end plate 220.

With this configuration, the gas flowing in the first direction (X) along the flow path formed by the guide plate 250 and the housing cover 240 may flow into the inflow space 232 as its flow direction changes to the third direction (Z) through the through-hole 252 formed in the guide plate 250. Then, the gas introduced into the inflow space 232 may be discharged through the exhaust hole 221 of the end plate 220 after its flow direction is changed to the first direction (X) inside the filter structure 100. At this time, if the pressure of the gas discharged through the exhaust hole 221 is greater than or equal to a certain level, the pack vent part 260 may be opened so that the gas can be discharged to the outside of the housing 200.

The filter structure 100 may be a configuration disposed in a section where the gas flow direction between the partition part 230 and the end plate 220 changes from the third direction (Z) to the first direction (X) to filter foreign matter included in the gas.

In some embodiments, the filter structure 100 may include a base frame 110 having a hollow, and a filter part 120 including a plurality of filters provided in the base frame 110 to filter foreign matter included in gas and to have different angles with respect to the gas flow direction.

Referring to FIG. 2, the base frame 110 may be a configuration that supports the filter part 120a. In some embodiments, the base frame 110 may include a center frame 111, a first guide frame 112a, a second guide frame 112b, a third guide frame 112c, and a fourth guide frame 112d disposed at regular intervals along a circumference of the center frame 111, and a support frame extending from both ends of the center frame 111 and respectively connected to both ends of the first guide frame 112a to the fourth guide frame 112d.

The filter structure 100 may be one of the filter structure 101 of the first embodiment to the filter structure 106 of the sixth embodiment described with reference to FIG. 1 to FIG. 8. Hereinafter, a state in which one of the filter structure 101 of the first embodiment to the filter structure 106 of the sixth embodiment is disposed in the battery pack 10 will be described in more detail.

FIG. 12 is a cross-sectional view illustrating an example of the filter structure of the first embodiment in a battery pack according to some embodiments of the present disclosure.

Referring to FIG. 12, the filter part 120a of the filter structure 101 according to the first embodiment may include a first filter 121 coupled to a first guide frame 112a and a second guide frame 112b, a second filter 122 disposed in a direction perpendicular to the first filter 121 and coupled to the second guide frame 112b and a third guide frame 112c, a third filter 123 disposed to face the first filter 121 and coupled to the third guide frame 112c and a fourth guide frame 112d, and a fourth filter 124 disposed to face the second filter 122 and coupled to the fourth guide frame 112d and the first guide frame 112a.

The filter structure 101 is disposed on a flange part 231 of a partition part 230, and gas is introduced in a third direction (Z) toward the flange part 231, and foreign matter may be filtered from the gas discharged in a first direction (X) toward an exhaust hole 221 of an end plate 220.

Among the gas flowing into the filter structure 101, a first gas flow F1 flowing between a reference line RL in the third direction (Z) passing through a center frame 111 and the end plate 220 may pass through the first filter 121 and the second filter 122, whereby foreign matter included in the gas may be filtered. A second gas flow F2 flowing between the reference line RL and the partition part 230 may also pass through the first filter 121 and the second filter 122, whereby foreign matter included in the gas may be filtered.

As such, even if the gas flow direction changes, the gas passes through a plurality of filters, so that foreign matter may be filtered more effectively.

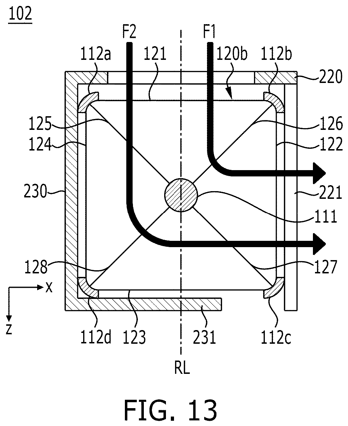

FIG. 13 is a cross-sectional view illustrating an example of the filter structure of the second embodiment in a battery pack according to some embodiments of the present disclosure.

Referring to FIG. 13, the filter part 120b of the filter structure 102 according to the second embodiment may include a first filter 121 coupled to a first guide frame 112a and a second guide frame 112b, a second filter 122 disposed in a direction perpendicular to the first filter 121 and coupled to the second guide frame 112b and a third guide frame 112c, a third filter 123 disposed to face the first filter 121 and coupled to the third guide frame 112c and a fourth guide frame 112d, and a fourth filter 124 disposed to face the second filter 122 and coupled to the fourth guide frame 112d and the first guide frame 112a.

In addition, the filter part 120b may further include a fifth filter 125 coupled to the first guide frame 112a and a center frame 111, a sixth filter 126 coupled to the second guide frame 112b and the center frame 111, a seventh filter 127 coupled to the third guide frame 112c and the center frame 111, and an eighth filter 128 coupled to the fourth guide frame 112d and the center frame 111.

The filter structure 102 is disposed on a flange part 231 of a partition part 230, and gas is introduced in a third direction (Z) toward the flange part 231, and foreign matter may be filtered from the gas discharged in a first direction (X) toward an exhaust hole 221 of an end plate 220.

Among the gas flowing into the filter structure 102, a first gas flow F1 flowing between a reference line RL in the third direction (Z) passing through a center frame 111 and the end plate 220 may pass through the first filter 121, the sixth filter 126, and the second filter 122, whereby foreign matter included in the gas may be filtered. A second gas flow F2 flowing between the reference line RL and the partition part 230 may pass through the first filter 121, the fifth filter 125, the eighth filter 128, the seventh filter 127, and the second filter 122, whereby foreign matter included in the gas may be filtered.

As such, even if the gas flow direction changes, the gas passes through a plurality of filters, so that foreign matter may be filtered more effectively.

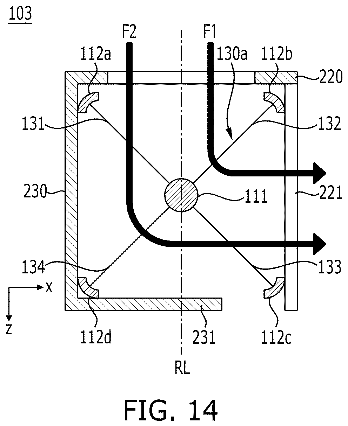

FIG. 14 is a cross-sectional view illustrating an example of the filter structure of the third embodiment in a battery pack according to some embodiments of the present disclosure.

Referring to FIG. 14, the filter part 130a of the filter structure 103 according to the third embodiment may include a first filter 131 coupled to a first guide frame 112a and a center frame 111, a second filter 132 coupled to a second guide frame 112b and the center frame 111, a third filter 133 coupled to a third guide frame 112c and the center frame 111, and a fourth filter 134 coupled to a fourth guide frame 112d and the center frame 111.

The filter structure 103 is disposed on a flange part 231 of a partition part 230, and gas is introduced in a third direction (Z) toward the flange part 231, and foreign matter may be filtered from the gas discharged in a first direction (X) toward an exhaust hole 221 of an end plate 220.

Among the gas flowing into the filter structure 103, a first gas flow F1 flowing between a reference line RL in the third direction (Z) passing through a center frame 111 and the end plate 220 may pass through the second filter 132, whereby foreign matter included in the gas may be filtered. A second gas flow F2 flowing between the reference line RL and the partition part 230 may pass through the first filter 131, the fourth filter 134, and the third filter 133, whereby foreign matter included in the gas may be filtered.

As such, even if the gas flow direction changes, the gas passes through a plurality of filters, so that foreign matter may be filtered more effectively.

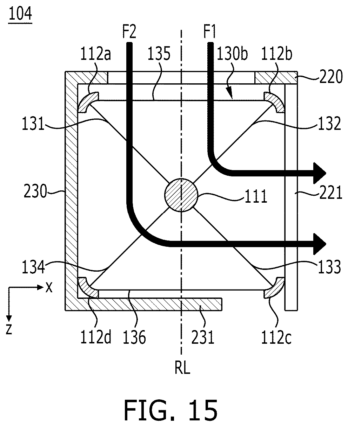

FIG. 15 is a cross-sectional view illustrating an example of the filter structure of the fourth embodiment in a battery pack according to some embodiments of the present disclosure.

Referring to FIG. 15, the filter part 130b of the filter structure 104 according to the fourth embodiment may include a first filter 131 coupled to a first guide frame 112a and a center frame 111, a second filter 132 coupled to a second guide frame 112b and the center frame 111, a third filter 133 coupled to a third guide frame 112c and the center frame 111, and a fourth filter 134 coupled to a fourth guide frame 112d and the center frame 111. That is, the first filter 131 to the fourth filter 134 may be formed in a cross shape.

In addition, the filter part 130b may further include a fifth filter 135 coupled to the first guide frame 112a and the second guide frame 112b, and a sixth filter 136 disposed to face the fifth filter 135 and coupled to the third guide frame 112c and the fourth guide frame 112d. That is, the first filter 131 to the sixth filter 136 may be formed in an hourglass shape.

The filter structure 104 is disposed on a flange part 231 of a partition part 230, and gas is introduced in a third direction (Z) toward the flange part 231, and foreign matter may be filtered from the gas discharged in a first direction (X) toward an exhaust hole 221 of an end plate 220.

Among the gas flowing into the filter structure 104, a first gas flow F1 flowing between a reference line RL in the third direction (Z) passing through a center frame 111 and the end plate 220 may pass through the fifth filter 135 and the second filter 132, whereby foreign matter included in the gas may be filtered. A second gas flow F2 flowing between the reference line RL and the partition part 230 may pass through the fifth filter 135, the first filter 131, the fourth filter 134, and the third filter 133, whereby foreign matter included in the gas may be filtered.

As such, even if the gas flow direction changes, the gas passes through a plurality of filters, so that foreign matter may be filtered more effectively.

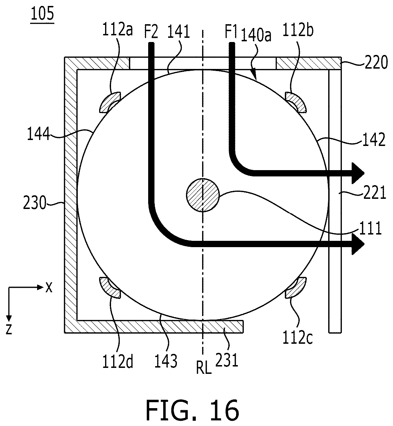

FIG. 16 is a cross-sectional view illustrating an example of the filter structure of the fifth embodiment in a battery pack according to some embodiments of the present disclosure.

Referring to FIG. 16, the filter part 140a of the filter structure 105 according to the fifth embodiment may include a first filter 141 formed in an arc shape and coupled to a first guide frame 112a and a second guide frame 112b, a second filter 142 formed in an arc shape, disposed in a direction perpendicular to the first filter 141, and coupled to the second guide frame 112b and a third guide frame 112c, a third filter 143 formed in an arc shape, disposed to face the first filter 141, and coupled to the third guide frame 112c and a fourth guide frame 112d, and a fourth filter 144 formed in an arc shape, disposed to face the second filter 142, and coupled to the fourth guide frame 112d and the first guide frame 112a.

The filter structure 105 is disposed on a flange part 231 of a partition part 230, and gas is introduced in a third direction (Z) toward the flange part 231, and foreign matter may be filtered from the gas discharged in a first direction (X) toward an exhaust hole 221 of an end plate 220.

Among the gas flowing into the filter structure 105, a first gas flow F1 flowing between a reference line RL in the third direction (Z) passing through a center frame 111 and the end plate 220 may pass through the first filter 141 and the second filter 142, whereby foreign matter included in the gas may be filtered. A second gas flow F2 flowing between the reference line RL and the partition part 230 may also pass through the first filter 141 and the second filter 142, whereby foreign matter included in the gas may be filtered.

As such, even if the gas flow direction changes, the gas passes through a plurality of filters, so that foreign matter may be filtered more effectively.

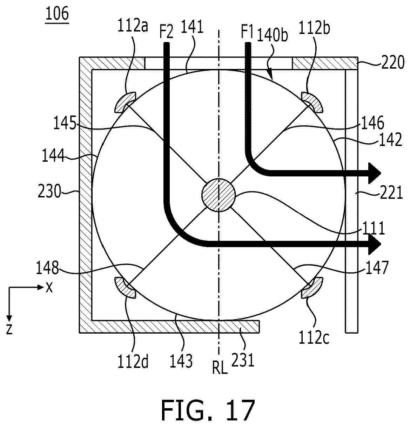

FIG. 17 is a cross-sectional view illustrating an example of the filter structure of the sixth embodiment in a battery pack according to some embodiments of the present disclosure.

Referring to FIG. 17, the filter part 140b of the filter structure 106 according to the sixth embodiment may include a first filter 141 formed in an arc shape and coupled to a first guide frame 112a and a second guide frame 112b, a second filter 142 formed in an arc shape, disposed in a direction perpendicular to the first filter 141, and coupled to the second guide frame 112b and a third guide frame 112c, a third filter 143 formed in an arc shape, disposed to face the first filter 141, and coupled to the third guide frame 112c and a fourth guide frame 112d, and a fourth filter 144 formed in an arc shape, disposed to face the second filter 142, and coupled to the fourth guide frame 112d and the first guide frame 112a.

In addition, the filter part 140b may further include a fifth filter 145 coupled to the first guide frame 112a and a center frame 111, a sixth filter 146 coupled to the second guide frame 112b and the center frame 111, a seventh filter 147 coupled to the third guide frame 112c and the center frame 111, and an eighth filter 148 coupled to the fourth guide frame 112d and the center frame 111.

The filter structure 106 is disposed on a flange part 231 of a partition part 230, and gas flows in a third direction (Z) toward the flange part 231, and foreign matter may be filtered from the gas discharged in a first direction (X) toward an exhaust hole 221 of an end plate 220.

Among the gas flowing into the filter structure 106, a first gas flow F1 flowing between a reference line RL in the third direction (Z) passing through a center frame 111 and the end plate 220 may pass through the first filter 141, the sixth filter 146, and the second filter 142, whereby foreign matter included in the gas may be filtered. A second gas flow F2 flowing between the reference line RL and the partition part 230 may pass through the first filter 141, the fifth filter 145, the eighth filter 148, the seventh filter 147, and the second filter 142, whereby foreign matter included in the gas may be filtered.

As such, even if the gas flow direction changes, the gas passes through a plurality of filters, so that foreign matter may be filtered more effectively.

According to some embodiments of the present disclosure, in the filter structure, filters are provided at different angles with respect to the gas flow direction, so that foreign matter included in the gas may be efficiently filtered.

According to some embodiments of the present disclosure, the battery pack may prevent a flame from being discharged to the outside of the battery pack by efficiently filtering foreign matter from high-temperature gas generated during thermal runaway with the filter structure.

Although the present disclosure has been described with reference to embodiments and drawings illustrating aspects thereof, the present disclosure is not limited thereto. Various modifications and variations can be made by a person skilled in the art to which the present disclosure belongs within the scope of the technical scope of the present disclosure and the claims and their equivalents, below.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A filter structure (101, 102, 103, 104, 105, 106), comprising:
a base frame (110) having a hollow; and
a filter part (120a, 120b, 130a, 130b, 140a, 140b) comprising a plurality of filters in the base frame (110) to filter foreign matter in a gas, the plurality of filters having different angles with respect to a flow direction of the gas.

2. The filter structure as claimed in claim 1, wherein the base frame (110) comprises:
a center frame (111);
a first guide frame (112a), a second guide frame (112b), a third guide frame (112c), and a fourth guide frame (112d) at regular intervals along a circumference of the center frame (111); and
a support frame extending from opposite ends of the center frame (111) and respectively connected to the opposite ends of the first guide frame (112a) to the fourth guide frame (112d).

3. The filter structure (101) as claimed in claim 2, wherein the filter part (120a) comprises:
a first filter (121) coupled to the first guide frame (112a) and the second guide frame (112b);
a second filter (122) in a direction perpendicular to the first filter (121), the second filter (122) being coupled to the second guide frame (112b) and the third guide frame (112c);
a third filter (123) facing the first filter (121), the third filter (123) being coupled to the third guide frame (112c) and the fourth guide frame (112d); and
a fourth filter (124) facing the second filter (122), the fourth filter (124) being coupled to the fourth guide frame (112d) and the first guide frame (112a).

4. The filter structure (102) as claimed in claim 3, wherein the filter part (120b) further comprises:
a fifth filter (125) coupled to the first guide frame (112a) and the center frame (111);
a sixth filter (126) coupled to the second guide frame (112b) and the center frame (111);
a seventh filter (127) coupled to the third guide frame (112c) and the center frame (111); and
an eighth filter (128) coupled to the fourth guide frame (112d) and the center frame (111).

5. The filter structure (103) as claimed in claim 2, wherein the filter part (130a) comprises:
a first filter (131) coupled to the first guide frame (112a) and the center frame (111);
a second filter (132) coupled to the second guide frame (112b) and the center frame (111);
a third filter (133) coupled to the third guide frame (112c) and the center frame (111); and
a fourth filter (134) coupled to the fourth guide frame (112d) and the center frame (111).

6. The filter structure (104) as claimed in claim 5, wherein the filter part (130b) further comprises:
a fifth filter (135) coupled to the first guide frame (112a) and the second guide frame (112b); and
a sixth filter (136) facing the fifth filter (135), the sixth filter (136) being coupled to the third guide frame (112c) and the fourth guide frame (112d).

7. The filter structure (105) as claimed in claim 2, wherein the filter part (140a) comprises:
a first filter (141) having an arc shape, the first filter (141) being coupled to the first guide frame (112a) and the second guide frame (112b);
a second filter (142) having an arc shape, the second filter (142) being in a direction perpendicular to the first filter (141), the second filter (142) being coupled to the second guide frame (112b) and the third guide frame (112c);
a third filter (143) having an arc shape, the third filter (143) facing the first filter (141), the third filter (143) being coupled to the third guide frame (112c) and the fourth guide frame (112d); and
a fourth filter (144) having an arc shape, the fourth filter (144) facing the second filter (142), the fourth filter (144) being coupled to the fourth guide frame (112d) and the first guide frame (112a).

8. The filter structure (106) as claimed in claim 7, wherein the filter part (140b) further comprises:
a fifth filter (145) coupled to the first guide frame (112a) and the center frame (111);
a sixth filter (146) coupled to the second guide frame (112b) and the center frame (111);
a seventh filter (147) coupled to the third guide frame (112c) and the center frame (111); and
an eighth filter (148) coupled to the fourth guide frame (112d) and the center frame (111).

9. The filter structure (101, 102, 103, 104, 105, 106) as claimed in any one of claims 2 to 8, wherein the filter part (120a, 120b, 130a, 130b, 140a, 140b) further comprises an auxiliary filter (150) coupled to the support frame.

10. The filter structure (101, 102, 103, 104, 105, 106) as claimed in any one of claims 2 to 9, wherein the base frame (110) further comprises a reinforcing frame (114) connecting opposite ends of the first guide frame (112a) to the fourth guide frame (112d).

11. The filter structure (101, 102, 103, 104, 105, 106) as claimed in any preceding claim, wherein the filter part (120a, 120b, 130a, 130b, 140a, 140b) has a pore size of 40 mesh to 150 mesh.

12. A battery pack (10), comprising:
a battery module (300) comprising a plurality of battery cells (310), each of the plurality of battery cells (310) including a cell vent part (311);
a housing (200) accommodating the battery module (300);
a pack vent part (260) on one side of the housing (200), the pack vent part (260) being configured to discharge a gas generated from the plurality of battery cells (310) to an outside; and
a filter structure (100) between the battery module (300) and the pack vent part (260) in the housing (200), the filter structure (100) being configured to filter foreign matter in the gas,
wherein the filter structure (100) is a filter structure (101, 102, 103, 104, 105, 106) according to any one of claims 1 to 11.

13. The battery pack (10) as claimed in claim 12, wherein the housing (200) comprises:
a housing body (210) accommodating the battery module (300) through an open surface, the housing body (210) including an end plate (220) perpendicular to the open surface and to which the pack vent part (260) is coupled;
a partition part (230) coupled to the housing body (210) between the end plate (220) and the battery module (300) to create an inflow space into which the gas flows, the filter structure (100) being in the inflow space; and
a housing cover (240) coupled to the open surface of the housing body (210).

14. The battery pack (10) as claimed in claim 13, further comprising a guide plate (250) on an upper portion of the battery module (300), the guide plate (250) including a communication hole (251) communicating with the cell vent part (311), the guide plate (250) being configured to guide the gas discharged from the cell vent part (311) to flow to the pack vent part (260).

15. The battery pack (10) as claimed in claim 14, wherein the guide plate (250) comprises a through-hole (252) communicating with the inflow space such that the gas introduced through the communication hole (251) flows into the inflow space.
